(19) Europäisches Patentamt
European Patent Office
Office européen des brevets

(11) Publication number: 0 117 715
B1

(12) # EUROPEAN PATENT SPECIFICATION

(45) Date of publication of patent specification: **01.06.88**

(51) Int. Cl.$^4$: **G 11 B 7/08**

(21) Application number: **84301137.0**

(22) Date of filing: **22.02.84**

(54) **Optical disc players.**

(30) Priority: **28.02.83 JP 32585/83**

(43) Date of publication of application:
**05.09.84 Bulletin 84/36**

(45) Publication of the grant of the patent:
**01.06.88 Bulletin 88/22**

(84) Designated Contracting States:
**DE FR GB IT**

(56) References cited:
**EP-A-0 050 967**
**EP-A-0 070 408**
**EP-A-0 073 921**
**DE-A-3 227 300**

(73) Proprietor: **SONY CORPORATION**
**7-35 Kitashinagawa 6-Chome Shinagawa-ku**
**Tokyo 141 (JP)**

(72) Inventor: **Ogawa, Hiroshi c/o Patent Division**
**Sony Corporation 7-35 Kitashinagawa-6**
**Shinagawa-ku Tokyo (JP)**

(74) Representative: **Thomas, Christopher Hugo et al**
**D Young & Co 10 Staple Inn**
**London WC1V 7RD (GB)**

EP 0 117 715 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to optical disc players for reproducing optically an information signal from an optical disc, such as an optical digital audio disc, on which the information signal is recorded in a record track formed with an arrangement of a plurality of small pits.

In an optical disc player for reproducing an information signal from an optical digital audio disc, on which the information signal is recorded in the form of small pits arranged in a spiral track, a light beam is used for reading the information signal from the spiral track. The light beam is emitted from an optical head which is moved in the direction of the radius of the optical disc, and the light beam is required to trace correctly the spiral track and to be focused correctly on the surface of the optical disc on which the spiral track is formed. To make the light beam comply with these requirements, tracking control and focus control are performed. In the tracking control, the position of a beam spot formed by the light beam on the surface of the optical disc in relation to the spiral track is detected to produce a tracking detection output. A focusing lens in the optical head or the optical head in its entirety is then moved in the direction of the radius of the optical disc in response to the tracking detection output. In the focus control, a focusing condition of the light beam on the surface of the optical disc is detected to produce a focus detection output and the focusing lens in the optical head or the optical head in its entirety is moved in the direction perpendicular to the surface of the optical disc in response to the focus detection output.

To detect the position of the beam spot on the surface of the optical disc in relation to the spiral track, there have been proposed several detecting arrangements. These are classified into two types, one of which uses two special light beams provided in addition to the light beam for reading the information signal, and the other of which does not use any light beam other than the one for reading the information signal. As arrangements of the type operative without two special light beams, detecting arrangements such as so-called "push-pull systems" and "heterodyne systems" have been known. In these detecting arrangements, a reflected light beam from the optical disc, which is modulated in intensity at the surface of the optical disc, is projected onto a photodetector comprising a plurality of photodetecting elements to form a beam spot with its pattern varying in response to the position of the beam spot formed by the light beam on the surface of the optical disc in relation to the spiral track. Variations in the pattern of the beam spot on the photodetector are derived in the form of an electric signal obtained by calculation from the outputs of the photodetecting elements of the photodetector.

On the other hand, to detect the focus condition of the light beam on the surface of the optical disc, detecting arrangements such as so-called "astigmatism systems" and "gable roof prism systems" have been known. In these detecting arrangements also, a reflected light beam from the optical disc, which is modulated at the surface of the optical disc, is projected onto a photodetector comprising a plurality of photodetecting elements to form a beam spot with its pattern varying in response to the focusing condition of the light beam on the surface of the optical disc. Variations in the pattern of the beam spot on the photodetector are derived in the form of an electric signal obtained by calculation from the outputs of the photodetecting elements of the photodetector.

In previously proposed optical disc players, the signal obtained by calculation from the outputs of the photodetecting elements is used without being modified as a tracking error signal representing deviations of the beam spot on the surface of the optical disc from the centre of the spiral track, or as a focusing error signal representing defocus of the light beam on the surface of the optical disc. Such a tracking error signal or focus error signal is limited to a predetermined frequency range by being passed through a filter circuit and is then passed to a power amplifier circuit to form a tracking control signal which is supplied to a driving device for tracking control to move the focusing lens in the optical head or the optical head in its entirety in the direction of the radius of the optical disc, or a focus control signal which is supplied to a driving device for focus control to move the focus lens in the optical head or the optical head in its entirety in the direction perpendicular to the surface of the optical disc. This results in problems in maintaining the light beam in correct tracking relation to each turn of the spiral track, and in maintaining correct focus of the light beam incident upon the surface of the optical disc. There is also the problem that mechanical noise arises from the driving device for tracking control or focus control. Moreover, if the surface of the optical disc is damaged or stained, a so-called track jump movement may occur by which the beam spot jumps from a certain turn of the spiral track to an adjacent turn of the spiral track.

In the case of the tracking control arrangement, the above-mentioned tracking error signal derived by calculation takes a level corresponding to the position of the beam spot on the surface of the optical disc in relation to the spiral track when the beam spot on the surface of the optical disc is positioned on a pit, but takes a constant level independent of the position of the beam spot on the surface of the optical disc in relation to the spiral track when the beam spot is positioned on a plane portion between two successive pits. Therefore, the tracking error signal contains a frequency component resulting from the arrangement of the pits, and does not exactly represent the position of the beam spot relative to the spiral track. Consequently, with the tracking control in the previously proposed optical disc player in which the signal obtained by calculation from the outputs of the photodetecting elements is used without being modified as the tracking error signal, a control such as to move the light beam to trace the spiral track exactly cannot be achieved.

Then, in the case of the focus control arrangement, the pattern of the beam spot on the photodetector varies faithfully in response to the focusing condition of the light beam on the surface of the optical disc independent of the position of the beam spot on the surface of the optical disc in relative to the spiral track when the beam spot is positioned on a plane portion between the pits. However, it varies in response to both the focusing condition of the light beam on the surface of the optical disc and the position of the beam spot on the surface of the optical disc relative to the spiral track when the beam spot is positioned fully or partially on a pit. Accordingly, the above-mentioned focus error signal obtained by calculation takes a level corresponding to defocus of the light beam on the surface of the optical disc when the beam spot on the surface of the optical disc is positioned on a plane portion between the pits. However, it takes a level which varies in response to variations in the position of the beam spot on the surface of the optical disc in relation to the spiral disc, and does not correspond to defocus of the light beam on the surface of the optical disc when the beam spot is positioned fully or partially on a pit. As a result of this, such a focus error signal not only contains a frequency component resulting from the arrangement of the pits, but is also influenced by variations in the position of the beam spot on the surface of the optical disc, and does not exactly represent defocus of the light beam on the surface of the optical disc. Consequently, with the focus control in the previously proposed optical disc player in which the signal obtained by calculation from the outputs of the photodetecting elements is used without being modified as the focus error signal, a control such as to cause the light beam to focus exactly on the surface of the optical disc cannot be achieved.

In addition, since the tracking error signal or the focus error signal contains the frequently component resulting from the arrangement of the pits, mechanical noise results from this frequency component in the driving device for moving the focusing lens in the optical head or the optical head in its entirety in the direction of the radius of the optical disc or in the direction perpendicular to the surface of the optical disc, when the tracking or focus control signal is supplied to the driving device.

Moreover, when the optical disc has a non-reflecting portion due to damage or a stain on the surface thereof, a reproduced information signal obtained from the photodetector onto which the reflected light beam from the optical disc is projected is reduced to an extremely low level, and the tracking error signal becomes zero independent of the position of the beam spot on the surface of the optical disc relative to the spiral track. Accordingly, the beam spot is moved towards a location determined by the neutral position of the focusing lens in the optical head at the non-reflecting portion of the surface, so that a track jump movement of the light beam may occur. Similarly, when the light beam scans the non-reflecting portion, the focus error signal is not obtained and therefore the focusing condition of the light beam on the surface of the optical disc determined in response to the neutral position of the focusing lens in the optical head is taken, and so a large amount of defocus of the light beam may occur.

A previously proposed optical disc player including circuits for producing a tracking error signal and a focus error signal, and described below with reference to Figures 1 and 2 of the accompanying drawings, is further disclosed in our UK patent specification GB—A—2 090 437.

Such optical disc players are also disclosed in European patent specifications EP—A1—0 050 967 and EP—A1—0 070 408. EP—A1—0 050 967 discloses the derivation of sum and difference signals from reproduced output signals, the sampling of the difference signal by sampling pulses generated at positive going and negative going zero cross points of the sum signal to generate first and second sampled values which are held, and derivation of a tracking error signal by forming a difference between the first and second sampled values. EP—A1—0 070 408 discloses derivation of a tracking error signal by sampling a reproduced output signal during periods when the light beam spot is incident on a pit, and holding the sample values.

According to the present invention there is provided an optical disc player for reproducing an information signal recorded in the form of pits arranged in a record track on a disc, the optical disc player comprising:

a light source for generating a light beam;

optical means for directing the light beam from said light source onto the disc so as to be modulated by the record track and reflected therefrom; and

photodetecting means for receiving a reflected light beam from the disc to produce in response to the received light beam an output from which a reproduced information signal can be obtained; and

a control circuit including a first circuit portion for generating a tracking error signal from the output of said photodetecting means when a beam spot formed by the light beam on the disc is positioned on a pit;

characterised by:

said control circuit further including a second circuit portion for generating a focus error signal from the output of said photodetecting means when the beam spot formed by the light beam on the disc is positioned on a plane portion between pits.

With embodiments of optical disc player in accordance with the present invention, a tracking error signal which is not affected by the arrangement of the pits and represents exactly a position of the beam spot formed by the light beam on the optical disc in relation to the record track, and a focus error signal which is also not affected by the arrangement of the pits and represents exactly defocus of the light beam on the optical disc can be obtained, and in response to the tracking error signal and the focus error signal thus obtained, respectively, a tracking control operative to move the light beam to trace accurately the record track, and a focus control operative to cause the light beam directed to the optical disc accurately to focus on the optical disc can be achieved. Moreover, in embodiments of optical disc player in accordance with the present invention, since neither the tracking error signal nor the focus error signal contains a frequency component resulting from the arrangement of the pits, harsh mechanical noise is prevented from occuring in a driving device which is supplied with tracking and focus control signals obtained on the basis of these tracking and focus error signals.

The invention will now be described by way of example with reference to the accompanying drawings, throughout which like parts are referred to by like references, and in which:

Figure 1 is a schematic illustration showing a part of a previously proposed optical disc player in which an optical arrangement and a circuit for producing a reproduced information signal, a tracking error signal and a focus error signal are included;

Figure 2 is a schematic block diagram showing one example of a combination of a photodetecting assembly and an operational circuit used in the part of the optical disc player shown in Figure 1;

Figure 3 is a schematic block diagram showing part of one embodiment of optical disc player according to the present invention; and

Figures 4A to 4J are waveform diagrams used for explaining the operation of the part of the embodiment shown in Figure 3.

First, to facilitate understanding of the present invention, a previously proposed optical disc player will be described with reference to Figure 1.

Figure 1 shows a part of the previously proposed optical disc player in which an optical arrangement forming an optical head and a circuit for deriving a reproduced information signal and tracking and focus error signals are included. A laser light beam emitted from a laser light source 1 is directed, through an iris 2 which is provided as occasion demands, a polarized beam splitter 3, a quarter-wave plate 4 and an object lens 5 serving as a focusing lens, to impinge on an optical disc 6 on which an information signal is recorded in the form of pits arranged in a spiral record track. At the surface of the optical disc 6 in which the record track is formed, the laser light beam incident thereupon is modulated in intensity and reflected, and the reflected laser light beam passes through the object lens 5 and the quarter-wave plate 4 to the polarized beam splitter 3. The reflected laser light beam is deflected at the polarized beam splitter 3 to be guided to a photodetecting assembly 7. The photodetecting assembly 7 detects the reflected laser light beam to produce an output signal which varies in response to variations in the reflected laser light beam and is supplied to an operational circuit 8. At the operational circuit 8, a reproduced information signal, a first resultant signal used as a tracking error signal and a second resultant signal used as a focus error signal are produced from the output signal of the photodetecting assembly 7. The first and second resultant signals are supplied to a driving device 9 for moving the object lens 5 both in the direction of the radius of the optical disc 6 and in the direction perpendicular to the surface of the optical disc 6 so as to carry out tracking and focus controls.

Figure 2 shows an example of a combination of the photodetecting assembly 7 and the operational circuit 8 shown in Figure 1. In this example, the photodetecting assembly 7 comprises a first photodetector 11 composed of two photodetecting elements 11a and 11b on which the reflected laser light beam is projected and a second photodetector 12 composed of four photodetecting elements 12a, 12b, 12c and 12d on which the reflected laser light beam is also projected. The operational circuit 8 comprises a subtractor 20a for deriving the difference between the outputs of the photodetecting elements 11a and 11b, an adder 20b for deriving the sum of the outputs of the photodetecting elements 12a and 12c, an adder 20c for deriving the sum of the outputs of the photodetecting elements 12b and 12d, a subtractor 20d for deriving the difference between the outputs of the adders 20b and 20c, and an adder 20e for summing the outputs of the photodetecting elements 12a, 12b, 12c and 12d. The first photodetector 11 and the subtractor 20a form an arrangement for producing the first resultant signal $TE_0$, which is used as the tracking error signal in the optical disc player of Figure 1, in accordance with a so-called push-pull system, and the second photodetector 12, the adders 20b and 20c, and the subtractor 20d form an arrangement for producing the second resultant single $FE_0$, which is used as the focus error signal in the optical disc player shown in Figure 1, in accordance with a so-called astigmatism system. Moreover, the adder 20e produces the reproduced information signals $RF_0$ from the outputs of the four photodetecting elements 12a to 12d forming the second photodetector 12.

In this previously proposed optical disc player, the first and second resultant signals $TE_0$ and $TF_0$ obtained from the subtractors 20a and 20d, respectively, are used without being modified as the tracking and focus error signals, and this results in the aforementioned problems.

An embodiment of optical disc player according to the present invention will now be described with reference to Figures 3 and 4A to 4J.

Figure 3 shows part of one example of the optical disc player according to the present invention. This example employs an optical arrangement forming an optical head as shown in Figure 1 and an optical disc on which an information signal is recorded in the form of pits arranged in a spiral record track or a plurality of record tracks formed into concentric circles.

In the example of Figure 3, the first and second photodetectors 11 and 12 as shown in Figure 2 are also employed for receiving a reflected laser light beam passing through the optical arrangement as shown in Figure 1 from the optical disc and an operational circuit 20 which corresponds to the operational circuit 8 shown in Figure 2 is provided to be supplied with the outputs of the first and second photodetectors 11 and 12. Accordingly, the first resultant signal $TE_0$, the second resultant signal $FE_0$ and the reproduced information signal $RF_0$ obtained as described above are also derived from the operational circuit 20.

The first resultant signal $TE_0$, which is used as the tracking error signal in the optical disc player of Figure 1, has a waveform which as shown in Figure 4G takes a level corresponding to the position of a beam spot formed by the laser light beam on the optical disc in relation to the record track when the beam spot on the optical disc is positioned fully on one of the pits P arranged as shown in Figure 4A. On the other hand, the second resultant signal $FE_0$, which is used as the focus error signal in the optical disc player of Figure 1, appears with a waveform which as shown in Figure 4I takes a level corresponding to defocus of the laser light beam projected onto the optical disc when the beam spot formed by the laser light beam on the optical disc is positioned fully on a plane portion between the pits P arranged as shown in Figure 4A.

The reproduced information signal $RF_0$ which appears with a waveform as shown in Figure 4B is supplied to a sampling pulse generating circuit 30. This sampling pulse generating circuit 30 produces a first sampling pulse $SP_T$ appearing as shown in Figure 4E when the beam spot formed by the laser light beam on the optical disc is positioned fully on the pit P and a second sampling pulse $SP_F$ appearing as shown in Figure 4F when the beam spot formed by the laser light beam on the optical disc is positioned fully on the plane portion of the optical disc between the pits P on the basis of the reproduced information signal $RF_0$. In the sampling pulse generating circuit 30, the reproduced information signal $RF_0$ is supplied to a voltage comparator 31 and compared with a reference voltage $V_0$ thereat to produce a reformed reproduced information signal $RF_X$ having a rectangular waveform as shown in Figure 4C. The reformed reproduced information signal $RF_X$ is supplied to a delay circuit 32 to be delayed by a predetermined time $\tau$, so that a rectangular waveform signal $RF_Y$ having a falling edge at each instant at which the beam spot formed by the laser light beam on the optical disc passes out of the front edge of the pit P, and a rising edge at each instant at which the beam spot passes out of the rear edge of the pit P, as shown in Figure 4F, is obtained from the delay circuit 32. The rectangular waveform signal $RF_Y$ is supplied to both monostable multivibrators 33 and 34. The monostable multivibrator 33 is triggered by each falling edge of the rectangular waveform signal $RF_Y$ to produce the first sampling pulse $SP_T$, and the monostable multivibrator 34 is triggered by each rising edge of the rectangular waveform signal $RF_Y$ to produce the second sampling pulse $SP_F$.

The first resultant signal $TE_0$ derived from the operational circuit 20 and the first sampling phase $SP_T$ are supplied to a first sampling and hold circuit 41, so that the first resultant signal $TE_0$ is subjected to sampling by the first sampling pulse $SP_T$ and the level of the sampled segment of the first resultant signal $TE_0$ is held until the next sampling at the first sampling and hold circuit 41. Similarly, the second resultant signal $FE_0$ derived from the operational circuit 20 and the second sampling pulse $SP_F$ are supplied to a second sampling and hold circuit 42, so that the second resultant signal $FE_0$ is subjected to sampling by the second sampling pulse $SP_F$ and the level of the sampled segment of the second resultant signal $FE_0$ is held until the next sampling at the second sampling and hold circuit 42.

As described, since the first resultant signal $TE_0$ takes the level corresponding to the position of the beam spot formed by the laser light beam on the optical disc in relation to the record track when the beam spot on the optical disc is positioned fully on the pit P, an output signal $TE_S$ of the first sampling and hold circuit 41 obtained by the sampling and holding operation thereat as shown in Figure 4H as a whole represents exactly the position of the beam spot formed by the laser light beam on the optical disc in relation to the record track, and contains virtually no frequency component resulting from the arrangement of the pits P. Similarly, since the second resultant signal $FE_0$ takes the level corresponding to defocus of the laser light beam projected onto the optical disc when the beam spot is positioned fully on the plane portion between the pits P, an output signal $FE_S$ of the second sampling and hold circuit 42 obtained by the sampling and hold operation thereat as shown in Figure 4J as a whole represents exactly defocus of the laser light beam projected onto the optical disc and contains virtually no frequency component resulting from the arrangement of the pits P.

Then, the output signal $TE_S$ from the first sampling and hold circuit 41 is supplied to a tracking control circuit 51 as a tracking error signal, and the output signal $FE_S$ from the second sampling and hold circuit 42 is supplied to a focus control circuit 52 as a focus error signal. The tracking control circuit 51 produces a tracking control signal from the tracking error signal $TE_S$ therein and supplies it to the driving device 9 provided to the object lens 5 in the same manner as those in Figure 1 for moving the object lens 5 in the direction of the radius of the optical disc so that tracking control is carried out. Moreover, the focus control circuit 52 produces a focus control signal from the focus error signal $FE_S$ therein and supplies it also to the driving device 9 for moving the object lens 5 in the direction perpendicular to the surface of the optical disc so that focus control is carried out.

In an embodiment of optical disc player according to the present invention having the part thus described, the tracking error signal $TE_S$ is generated on the basis of the first resultant signal $TE_0$ when the beam spot is positioned fully on the pit P and is held until the next generation, and therefore the tracking error signal $TE_S$ as a whole represents exactly the position of the beam spot formed by the laser light beam on the optical disc in relation to the record track. Accordingly, the laser light beam directed to the optical disc is controlled to trace correctly the record track under the tracking control performed in response to the tracking error signal $TE_S$. Similarly, the focus error signal $FE_S$ is generated on the basis of the second resultant signal $FE_0$ when the beam spot formed by the laser light beam on the optical disc is positioned fully on the plane portion between the pits P and is held until the next generation, and therefore the focus error signal $FE_S$ as a whole represents exactly defocusing of the laser light beam on the optical disc. Accordingly, the laser light beam directed to the optical disc is controlled to focus correctly on the optical disc under the focus control performed in response to the focus error signal $FE_S$.

Moreover, the tracking error signal $TE_S$ and the focus error signal $FE_S$ contain virtually no frequency component resulting from the arrangement of the pits P, and therefore the driving device does not cause any harsh mechanical noise when it operates in response to the tracking and focus control signals produced from the tracking and focus error signals, respectively.

In the case where the optical disc has a non-reflecting portion Q where the surface is damaged or stained as shown in Figure 4A, the first resultant signal $TE_0$ becomes zero independent of the position of the beam spot formed by the laser light beam on the optical disc in relation to the record track when the laser light beam scans the non-reflecting portion Q, and at that time the reproduced information signal $RF_0$ has such a low level as to be out of the modulation range m shown in Figure 4B, so that the first sampling pulse $SP_T$ is not produced. Therefore, the tracking error signal $TE_S$ is held at the level obtained just before the laser light beam started to scan the non-reflecting portion Q while the laser light beam scans the non-reflecting portion Q, so that track jump movement of the laser light beam is prevented from occuring. Moreover, the second sampling pulse $SP_F$ is also not produced when the laser light beam scans the non-reflecting portion Q of the optical disc, and therefore the focusing error signal $FE_S$ is held at the level obtained just before the laser light beam started to scan the non-reflecting portion Q while the laser light beam scans the non-reflecting portion Q, so that the laser light beam is prevented from having a large amount of defocus.

## Claims

1. An optical disc player for reproducing an information signal recorded in the form of pits arranged in a record track on a disc (6), the optical disc player comprising:

a light source (1) for generating a light beam;

optical means (5) for directing the light beam from said light source (1) onto the disc (6) so as to be modulated by the record track and reflected therefrom; and

photodetecting means (11, 12) for receiving a reflected light beam from the disc (6) to produce in response to the received light beam an output from which a reproduced information signal can be obtained; and

a control circuit including a first circuit portion (20, 33, 41) for generating a tracking error signal from the output of said photodetecting means (11, 12) when a beam spot formed by the light beam on the disc (6) is positioned on a pit; characterised by:

said control circuit further including a second circuit portion (20, 34, 42) for generating a focus error signal from the output of said photodetecting means (11, 12) when the beam spot formed by the light beam on the disc (6) is positioned on a plane portion between pits.

2. An optical disc player according to claim 1 wherein said second circuit means (20, 34, 42) comprises second operational circuit means (20) for producing from the output of said photodetecting means (11, 12) a second signal taking a level corresponding to defocus of the light beam on the disc (6) when the beam spot formed by the light beam on the disc (6) is positioned on the plane portion between the pits, second pulse generating means (34) for producing a second sampling pulse when the beam spot on the disc (6) is positioned on the plane portion between the pits, and second sampling and hold means (42) for causing said second signal to be subjected to sampling by said second sampling pulse and holding the level of the sampled segment of said second signal up to next sampling to generate the focus error signal.

3. An optical disc player according to claim 2 wherein said first circuit portion (20, 33, 41) comprises first operational circuit means (20) for producing from the output of said photodetecting means (11, 12) a first signal taking a level corresponding to the position of the beam spot formed by the light beam on the disc (6) in relation to the record track when the beam spot on the disc (6) is positioned on a pit, first pulse generating means (33) for producing a first sampling pulse when the beam spot on the disc is positioned on a pit, and first sampling and hold means (41) for causing said first signal to be subjected to sampling by said first sampling pulse and holding the level of the sampled segment of said first signal up to the next sampling to produce the tracking error signal.

**Patentansprüche**

1. Gerät für optische Platten zum Wiedergeben eines Informationssignals, das in Form von Vertiefungen aufgezeichnet ist, die in einer Aufzeichnungsspur auf einer Platte (6) angeordnet sind, mit

— einer Lichtquelle (1) zum Erzeugen eines Lichtstrahls,

— einem optischen Mittel (5) zum Richten des Lichtstrahls von der Lichtquelle (1) auf die Platte (6), so daß er durch die Aufzeichnungsspur moduliert und von dieser reflektiert wird,

— Photoerfassungsmitteln (11, 12) zum Empfangen eines von der Scheibe (6) reflektierten Lichtstrahls, um in Abhängigkeit von dem empfangenen Lichtstrahl ein Ausgangssignal zu erzeugen, aus dem ein wiedergegebenes Informationssignal gewonnen werden kann, und

— einer Steuerschaltung, die einen ersten Schaltungsteil (20, 33, 41) zum Erzeugen eines Spurverfolgungsfehlersignals aus dem Ausgangssignal der Photoerfassungsmittel (11, 12), wenn ein Strahlpunkt, der durch den Lichtstrahl auf der Platte (6) gebildet wird, auf einer Vertiefung liegt, enthält, dadurch gekennzeichnet, daß die Steuerschaltung desweiteren einen zweiten Schaltungsteil (20, 34, 42) zum Erzeugen eines Fokussierungsfehlersignals aus dem Ausgangssignal der Photoerfassungsmittel (11, 12), wenn der Strahlpunkt, der durch den Lichtstrahl auf der Platte (6) gebildet wird, auf einem ebenen Abschnitt zwischen Vertiefungen liegt, enthält.

2. Gerät für optische Platten nach Anspruch 1, bei dem der zweite Schaltungsteil (20, 34, 42) zweite Betriebsschaltungsmittel (20) zum Erzeugen eines zweiten Signals aus dem Ausgangssignal der Photoerfassungsmittel (11, 12), das einen Pegel annimmt, der mit der Defokussierung des Lichtstrahls auf der Platte (6) korrespondiert, wenn der Strahlpunkt, der durch den Lichtstrahl auf der Platte (6) gebildet wird, auf dem ebenen Abschnitt zwischen den Vertiefungen liegt, ein zweites Impulserzeugungsmittel (34) zum Erzeugen eines zweiten Abtastimpulses, wenn der Strahlpunkt auf der Platte (6) auf dem ebenen Abschnitt zwischen den Vertiefungen liegt ist, und ein zweites Abtast- und Haltemittel (42) zum Bewirken, daß das zweite Signal einer Abtastung durch den zweiten Abtastimpuls und einem Halten des Pegels des zweiten Abtastabschnitts des zweiten Signals bis zu dem nächsten Abtasten unterzogen wird, um das Fokussierungsfehlersignal zu erzeugen, enthält.

3. Gerät für optische Platten nach Anspruch 2, bei dem der erste Schaltungsteil (20, 33, 41) erste Betriebsschaltungsmittel (20) zum Erzeugen eines ersten Signals aus dem Ausgangssignal der Photoerfassungsmittel (11, 12), welches erste Signal einen Pegel annimmt, der mit der auf die Aufzeichnungsspur bezogenen Position des Strahlpunkts korrespondiert, welcher durch den Lichtstrahl auf der Platte (6) gebildet wird, wenn der Strahlpunkt auf der Platte (66) auf einer Vertiefung liegt, ein erstes Impulserzeugungsmittel (33) zum Erzeugen eines ersten Abtastimpulses, wenn der Strahlpunkt auf der Platte auf einer Vertiefung liegt, und ein erstes Abtast- u. Haltemittel (41) zum Bewirken, daß das erste Signal dem Abtasten durch den ersten Abtastimpuls und dem Halten des Pegels des abgetasteten Abschnitts des ersten Signals bis zu dem nächsten Abtasten unterzogen wird, um das Spurverfolgungsfehlersignal zu erzeugen, enthält.

**Revendications**

1. Lecteur de disques optiques permettant de reproduire un signal d'information enregistré sous la forme d'alvéoles disposées dans une piste d'enregistrement sur un disque (6), le lecteur de disques optiques comprenant:

une source lumineuse (1) servant à produire un faisceau laser;

un moyen optique (5) servant à diriger le faisceau lumineux de ladite source lumineuse (1) jusque sur le disque (6) afin qu'il soit modulé par la piste d'enregistrement et réfléchi par celle-ci;

un moyen de photodétection (11, 12) servant à recevoir un faisceau lumineux réfléchi en provenance du disque (6) afin de produire, en réponse au faisceau lumineux reçu, un signal de sortie à partir duquel un signal d'information reproduit peut être obtenu; et

un circuit de commande comportant une première partie de circuit (20, 33, 41) servant à produire un signal d'erreur de poursuite de piste à partir du signal de sortie dudit moyen de photodétection (11, 12) lorsqu'une tache formée par le faisceau lumineux sur le disque (6) est disposée sur une alvéole;

caractérisé par:

ledit circuit de commande comporte en outre une deuxième partie de circuit (20, 34, 42) servant à produire un signal d'erreur de mise au point à partir du signal de sortie dudit moyen de photodétection (11, 12) lorsque la tache formée par le faisceau lumineux sur le disque (6) est disposée sur une partie plane se trouvant entre les alvéoles.

2. Lecteur de disques optiques selon la revendication 1, où ladite deuxième partie de circuit (20, 34, 42) comprend un deuxième circuit fonctionnel (20) servant à produire, à partir du signal de sortie dudit moyen de photodétection (11, 12) un deuxième signal prenant un niveau qui correspond à la défocalisation du faisceau lumineux sur le disque (6) lorsque la tache formée par le faisceau lumineux sur le disque (6) est disposée sur la partie plane se trouvant entre les alvéoles, un deuxième moyen de production d'impulsions (34) servant à produire une deuxième impulsion d'échantillonnage lorsque la tache du faisceau sur le disque (6) est disposée sur la partie plane se trouvant entre les alvéoles, et un deuxième moyen d'échantillonnage et de maintien (42) servant à faire que ledit deuxième signal soit soumis à un échantillonnage à l'aide de ladite deuxième impulsion d'échantillonnage et à maintenir le niveau du segment échantillonné dudit deuxième signal jusqu'à l'échantillonnage suivant pour produire le signal d'erreur de mise au point.

3. Lecteur de disques optiques selon la revendication 2, où ladite première partie de circuit (20, 33, 41) comprend un premier circuit fonctionnel (20) servant à produire, à partir du signal de sortie dudit moyen de photodétection (11, 12), un premier signal prenant un niveau qui correspond à la position de la tache formée par le faisceau lumineux sur le disque (6) par rapport à la piste d'enregistrement lorsque la tache du faisceau sur le disque (6) est disposée sur une alvéole, un premier moyen générateur d'impulsions (33) servant à produire une première impulsion d'échantillonnage lorsque la tache du faisceau sur le disque est disposée sur une alvéole, et un premier moyen d'échantillonnage et de maintien (41) servant à faire que ledit premier signal soit soumis à un échantillonnage à l'aide de ladite première impulsion d'échantillonnage et à maintenir le niveau du segment échantillonné dudit premier signal juqu'à l'échantillonnage suivant pour produire le signal d'erreur de poursuite de piste.

FIG. 1

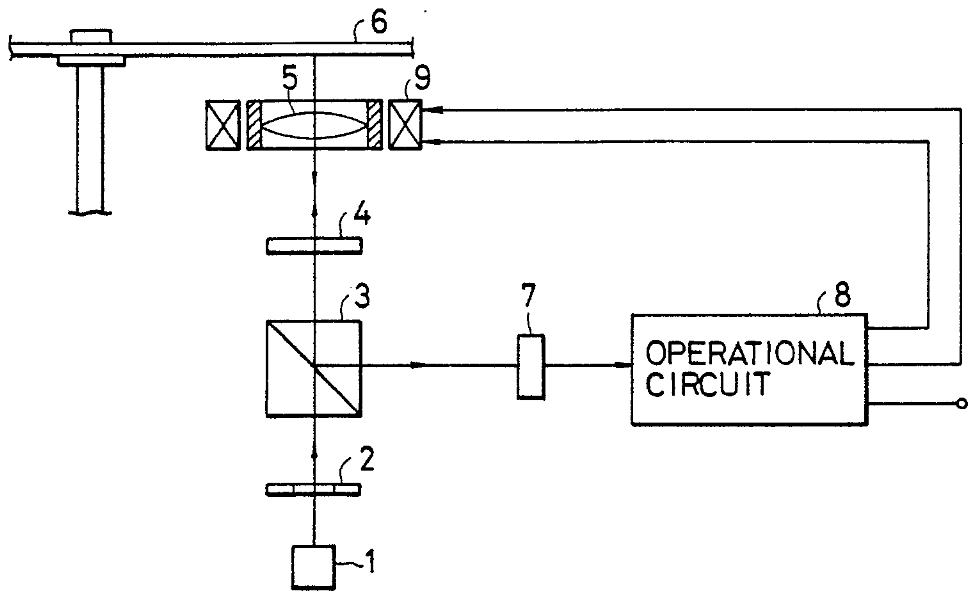
6
5
9
4
3
7
8
OPERATIONAL CIRCUIT
2
1

FIG. 2

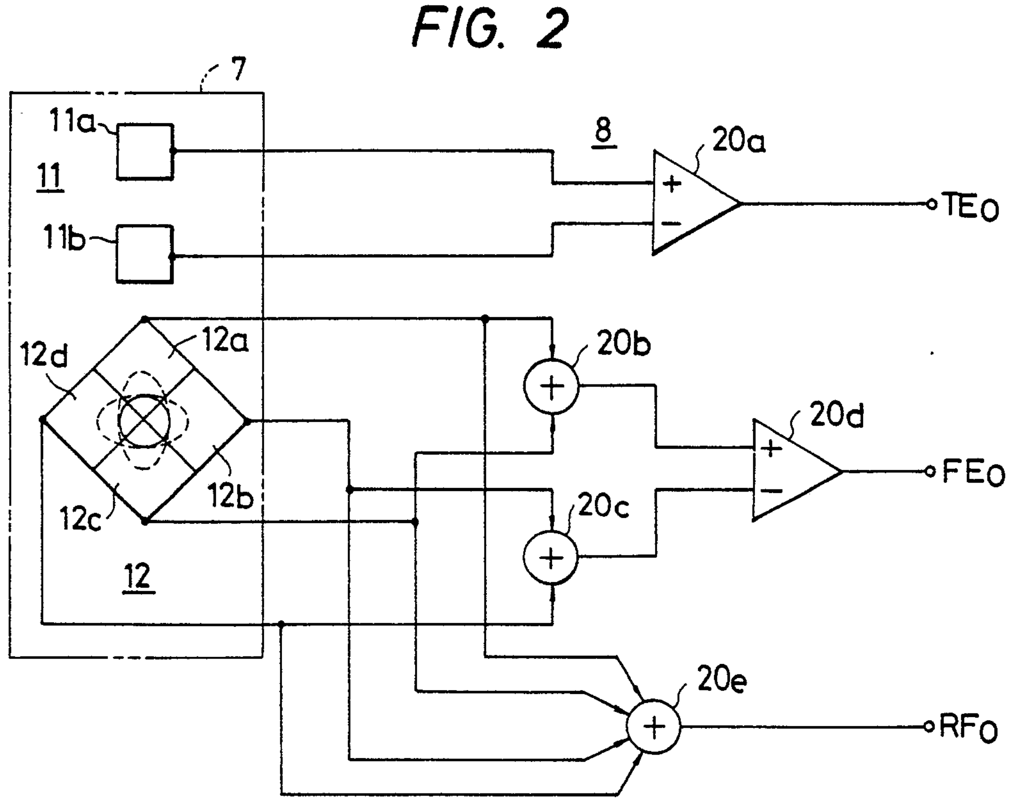
7
11a
11
11b
8
20a
TEo
12d
12a
20b
20d
FEo
12b
20c
12c
12
20e
RFo

FIG. 3

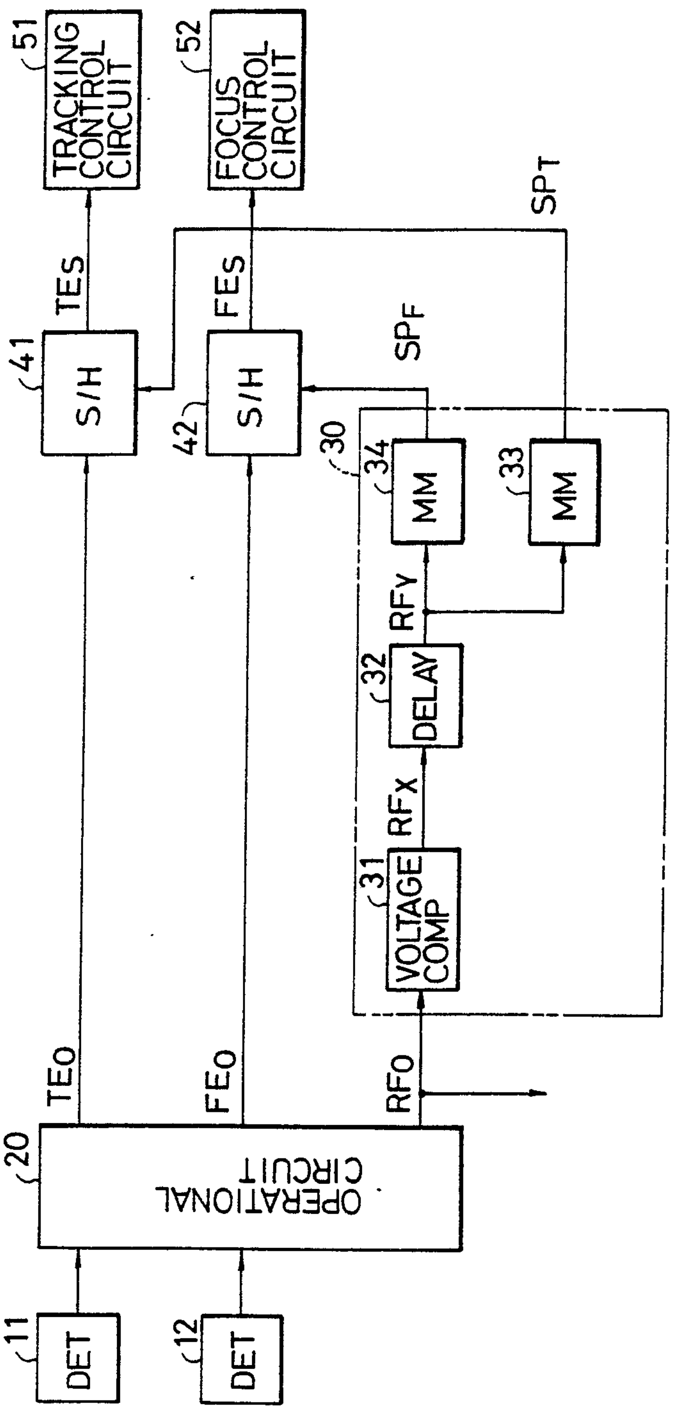
(8)
DET
11
DET
12
OPERATIONAL CIRCUIT
20
TEo
FEo
RFo
VOLTAGE COMP
31
RFx
DELAY
32
RFy
MM
34
MM
33
30
SPF
SPT
S/H
41
S/H
42
TEs
FEs
TRACKING CONTROL CIRCUIT
51
FOCUS CONTROL CIRCUIT
52

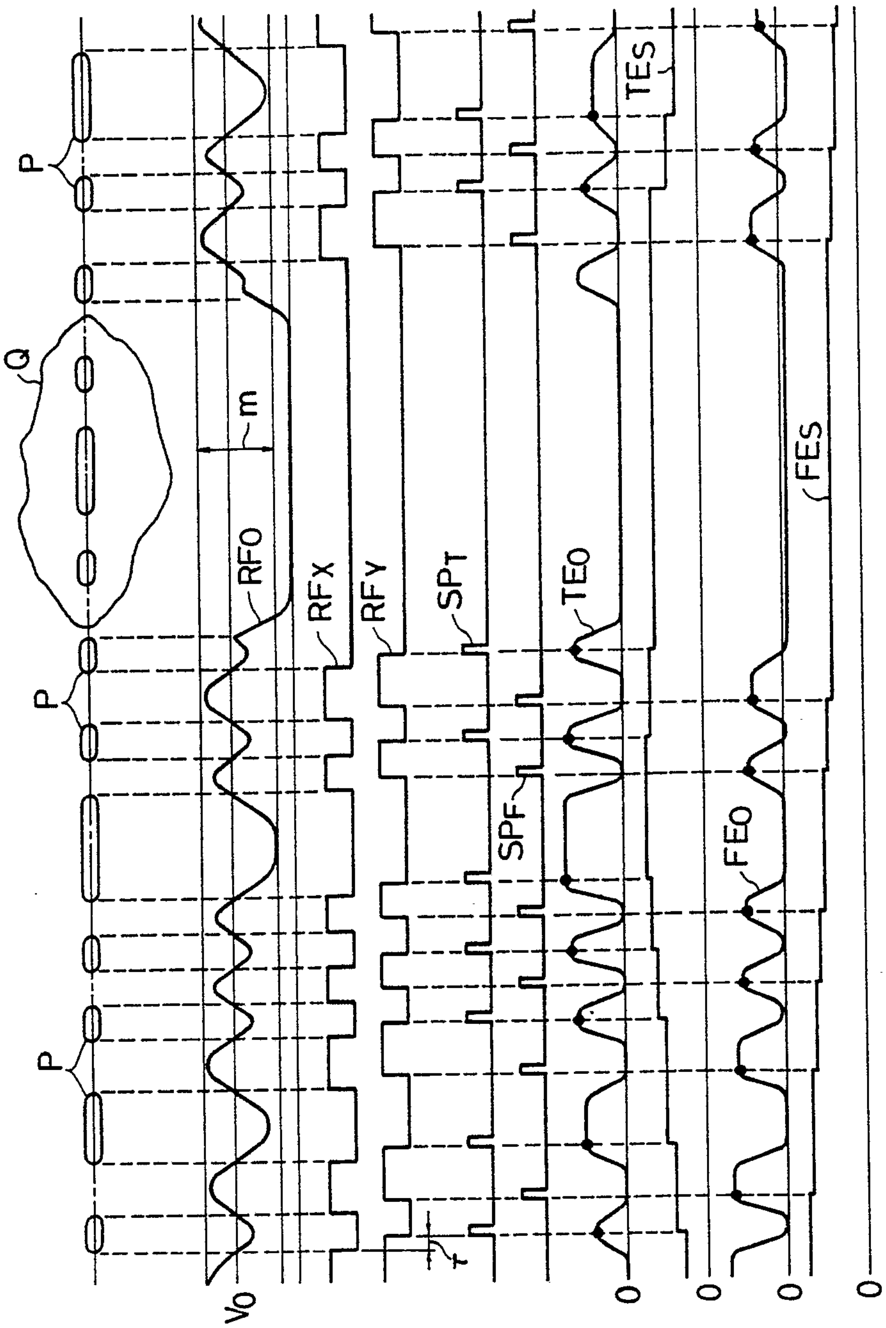


FIG. 4A
FIG. 4B
FIG. 4C
FIG. 4D
FIG. 4E
FIG. 4F
FIG. 4G
FIG. 4H
FIG. 4I
FIG. 4J